# EUROPEAN PATENT APPLICATION

(11) **EP 1 848 202 A2**
(43) Date of publication of application: **24.10.2007**
(21) Application number: 07106526.2
(22) Date of filing: 19.04.2007
(51) Int. Cl.: H04N 5/238, G02B 5/20, G03B 9/00

(54) **Light amount adjuster and imaging apparatus**

(30) Priority: 21.04.2006 JP 2006117463
(71) Applicant: Sony Corporation, Minato-ku Tokyo (JP)
(72) Inventor: Nanjo, Yusuke, TOKYO (JP)
(74) Representative: Thévenet, Jean-Bruno

(57) **Abstract**

A light amount adjuster includes two filter members (ND1, ND2), each having a gradation ND region where the transmittance continuously changes, disposed such that the two filter members (ND1, ND2) face each other and the direction in which the gradation of one of the filter members changes differs from the direction in which the gradation of the other one of the filter members (ND1, ND2) changes and configured such that the filter members (ND1, ND2) can move in a symmetrical manner with respect to each other.

## Description

### BACKGROUND OF THE INVENTION

### 1. FIELD OF THE INVENTION

The present invention relates to a novel light amount adjuster and imaging apparatus. More particularly, the invention relates to a light amount adjuster that causes little degradation in image quality and is suitable for a camera that uses an imaging device to receive light, such as a video camcorder and a digital still camera, and an imaging apparatus having such a light amount adjuster.

### 2. DESCRIPTION OF THE RELATED ART

An aperture stop is generally used as means for adjusting the amount of incident light in an imaging apparatus. However, it has been pointed out for a long time that a small aperture size (a large F-number) disadvantageously results in degradation in image quality due to diffraction. To solve this problem, there have been various proposals to use ND filters to attenuate the amount of transmitted light. For example, JP-A-58-184135 proposes to prevent the aperture stop from being set to a small aperture size by disposing ND filters having several transmittance levels between the lens and the imaging device and switching to an ND filter having appropriate transmittance according to the brightness of the subject. JP-A-2004-53633 proposes that in addition to similarly switching among ND filters, a mechanical shutter is used to limit the exposure time. JP-A-2005-348140 proposes to automatically switch among the settings of the aperture stop and the ND filter density based on the output signal from the imaging device so as to prevent the aperture stop from being set within the range where diffraction causes significant degradation.

JP-A-6-90403 proposes to use an ND filter utilizing an electrochromic effect in which transmittance is changed by the applied voltage. Similarly to JP-A-6-90403, JP-A-2006-3437 also proposes to utilize an electrochromic effect in an imaging apparatus using color separation prisms in such a way that a variable density ND filter is disposed between the lens and the prisms.

JP-A-52-117127 proposes to use a plurality of gradation ND filters whose transmittance continuously changes and use the overlapping portion of the gradation ND filters to change the density. JP-A-6-265971 suggests that insertion of the edge of an ND filter member into the aperture causes wavefront phase difference and hence degradation in image quality, and proposes that the aperture is covered with a transparent region when the stop is fully open, while a gradation ND region adjacent to the transparent region is inserted into the aperture so as to adjust the amount of light. JP-A-2004-205951 suggests causes of image quality degradation when a filter having a gradation ND region and a transparent region is inserted into the aperture, and suggests that as simulation-based experimental consideration, the image quality degradation is caused by the following three factors; diffraction caused by the region that is surrounded by the diaphragm blades and the ND filter and serves as a small aperture when the filter is inserted halfway into the aperture, large wavefront phase difference generated when the edge of the filter member is present in the aperture, and small wavefront phase difference generated at the border between the transparent region and the gradation ND region of the filter. JP-A-2003-241253 proposes a light amount adjuster in which a film base has two portions, each including a transparent region and a ND region, and the ND regions are inserted into the aperture from opposite directions.

### SUMMARY OF THE INVENTION

Considering an imaging apparatus as a video camcorder for imaging moving pictures, the proposals described above have various problems when implemented.

In the apparatuses described in JP-A-58-184135, JP-A-2004-53633 and JP-A-2005-348140, ND filters having different stepwise density levels are prepared and switched such that the aperture size will not be set to a small value. However, insertion and removal of the ND filters to and from the light path affects the moving picture screen, resulting in unnatural reproduced images. Specifically, when the ND filters are disposed at a position close to the imaging device and any one of the ND filters covers one-half the light path, one half of the screen becomes bright and the other half of the screen becomes dark, and the boundary between the bright and dark portions moves across the screen when the ND filter is inserted or removed. If the insertion and removal is instantaneously carried out, the movement of the boundary will not be so visible. However, changing the F-number of the aperture stop for exposure adjustment will not be carried out fast enough to be synchronized with the change in ND density, resulting in recording of a bright screen at one instant and a dark screen at another instant. When the ND filters are disposed adjacent to the aperture stop, the movement of the boundary between the bright and dark portions across the screen will not be so visible. However, a foreground or background blurred image appears to move in synchronization with the insertion and removal of the ND filters, and such a phenomenon will be recorded.

The apparatuses described in JP-A-6-90403 and JP-A-2006-3437 in which an electrochromic effect is applied to an ND filter can be considered as ideal light amount adjusters if practically sufficient characteristics are provided in a stable manner at low cost in volume production. At present, however, there are a large number of problems resulting from material and manufacturing methods, such as the non-flat spectral transmittance characteristic in the visible light region, slow response to the applied voltage, insufficient light adjustment range between the highest transmittance and the highest density, poor durability, and temperature dependence and aging property of the above characteristics. Therefore, the performance of the apparatuses is far from applicable to video camcorders.

Although the apparatus described in JP-A-52-117127 uses means for progressively covering a predetermined aperture of a diaphragm formed of diaphragm blades with two gradation ND filters, each having a shape similar to that of the diaphragm blade, no consideration is made to the phase difference caused by the edge of the filter member suggested in JP-A-6-265971 and JP-A-2004-205951.

In the apparatus described in JP-A-6-265971, although the effect of the edge of the filter member is solved, no description is made of how to fabricate the gradation ND filter and no consideration is made to the effect of phase difference caused by the gradation ND region and the transparent region, which will be a problem when ND filtering effect is provided by a deposited film. In surveillance video camcorders and the like, there is known a gradation ND filter that uses silver particles in a photographic silver-halide film to provide a gradation effect. Although such a gradation ND filter does not likely generate phase difference, it is anticipated that light scattering from the silver-halide particles may be problematic. Since no suggestion is provided as to how to fabricate the gradation ND filter, it is difficult to realize the apparatus.

In the apparatus described in JP-A-2004-205951, it can be expected that use of gradation ND provides a certain effect of reducing diffraction caused by the open area surrounded by the diaphragm blades and the high-density ND filter and serving as a small aperture. However, as far as the disclosed embodiments are concerned, the effect of phase difference caused by the edge of the filter member is suggested but not solved. Additionally, although it is desirable that the density of the ND filter is ideally uniform and continuously variable in the area where the ND filter covers the light path, the fact that the gradation ND does not have uniform density raises a concern about a side effect. Particularly, considering that this approach is applied to a video camcorder using a color separation prism by which the best image quality among video camcorders is expected, there may be provided not only positive effects but also side effects. When the direction in which the density continuously changes is aligned with the direction in which the prism disperses the light, the amount of light of the upper and lower light rays incident on the dichroic plane of the prism will differ from each other, resulting in color unevenness between the upper and lower parts of the screen when the light is dispersed in the vertical direction of the screen. Conversely, when the ND filter is inserted into the light path in the direction perpendicular to the direction in which the light is dispersed, brightness unevenness likely occurs between the right and left portions of the screen. In addition to the above, unevenness will be observed in the light intensity distribution in the circle of confusion of a blurred point light source image, resulting in a poor blurring effect.

When the apparatus described in JP-A-2003-241253 is applied to a video camcorder using a color separation prism, it can be expected that insertion and removal of the ND filters to and from the aperture from opposite directions can provide an effect of preventing color unevenness. However, the transparent region surrounded by the two ND regions forms a slit-like aperture in some cases, resulting in more significant degradation due to diffraction than the degradation experienced in the apparatuses described in JP-A-6-265971 and JP-A-2004-205951. Additionally, it is anticipated that degradation in image quality due to phase difference of the wavefronts that pass the boundary between the transparent region and the ND region will also be significant.

In view of the above problems, it is desirable to provide a light amount adjuster capable of preventing diffraction caused by a stopped-down aperture stop and an imaging apparatus having such a light amount adjuster.

A light amount adjuster according to an embodiment of the invention includes two filter members, each having a gradation ND region where the transmittance continuously changes, disposed such that the two filter members face each other and the direction in which the gradation of one of the filter members changes differs from the direction in which the gradation of the other one of the filter members changes and configured such that the filter members can move in a symmetrical manner with respect to each other.

A imaging apparatus according to an embodiment of the invention includes a lens, a light amount adjuster and an imaging device. The light amount adjuster includes two filter members, each having a gradation ND region where the transmittance continuously changes, disposed such that the two filter members face each other and the direction in which the gradation of one of the filter members changes differs from the direction in which the gradation of the other one of the filter members changes and configured such that the filter members can move in a symmetrical manner with respect to each other.

According to the invention, it is possible to prevent diffraction caused by a small aperture size of the aperture stop.

### BRIEF DESCRIPTION OF THE DRAWINGS

Fig. 1 is a schematic configuration diagram showing an example of the imaging apparatus according to an embodiment of the invention;
Fig. 2, along with Figs. 3 to 6, shows a first embodiment of filter members and how the two filter members are inserted into the light path when viewed in the optical axis direction;
Fig. 3 diagrammatically shows how the two filter members are inserted into the light path and the ND density expressed by the height of the triangle;
Fig. 4 diagrammatically shows the ND density in the light path in the form of the area of a geometrical figure in each of the states shown in Fig. 3;
Fig. 5 shows the state in which filter members having highest density regions are inserted into the light path such that the density in the light path is highest, the state being expressed in a manner similar to Figs. 3 and 4;
Fig. 6 is a diagrammatic view showing an example of programmed AE;
Fig. 7, along with Figs. 8 to 10, shows a second embodiment of filter members and how the two filter members are inserted into the light path when viewed in the optical axis direction;
Fig. 8 diagrammatically shows how the two filter members are inserted into the light path and the ND density expressed by the height of the triangle;
Fig. 9 diagrammatically shows the ND density in the light path in the form of the area of a geometrical figure in each of the states shown in Fig. 8;
Fig. 10 is a diagrammatic view showing an example of programmed AE;
Fig. 11, along with Figs. 12 and 13, shows a third embodiment of filter members and how the two filter members are inserted into the light path when viewed in the optical axis direction;
Fig. 12 diagrammatically shows how the two filter members are inserted into the light path and the ND density expressed by the height of the triangle;
Fig. 13 diagrammatically shows the ND density in the light path in the form of the area of a geometrical figure in each of the states shown in Fig. 12;
Fig. 14 is a schematic perspective view showing an example of a mechanism that symmetrically moves two filter members; and
Fig. 15 is a schematic perspective view showing another example of a mechanism that symmetrically moves two filter members.

### DESCRIPTION OF THE PREFERRED EMBODIMENTS

The best mode for carrying out the light amount adjuster and the imaging apparatus according to an embodiment of the invention will be described below.

The light amount adjuster according to an embodiment of the invention includes two filter members, each having a gradation ND region where the transmittance continuously changes, disposed such that the two filter members face each other and the direction in which the gradation of one of the filter members changes differs from the direction in which the gradation of the other one of the filter members changes and configured such that the filter members can move in a symmetrical manner with respect to each other.

Therefore, the light amount adjuster according to this embodiment of the invention can prevent diffraction caused by a small aperture size of an aperture stop.

The light amount adjuster according to this embodiment of the invention can be implemented in the following examples.
(1) Each of the filter members has a transparent region where the transmittance is uniform and at least 80%. To provide the highest transmittance, the transparent regions of the two filter members overlap each other and cover the entire light path.
(2) Each of the filter members has a lowest density region where the transmittance is uniform and 80% or lower. To provide the highest transmittance, the two filter members are both retracted from the light path.
(3) Each of the filter members has a lowest density region where the transmittance is uniform and 80% or lower and a transparent region where the transmittance is uniform and at least 80%. To provide the highest transmittance, the transparent regions of the two filter members overlap each other and cover the entire light path. To limit the amount of transmitted light, the lowest density region of one or both of the filter members is inserted into the light path to cover the entire light path, and then, the gradation ND regions of the two filter members are inserted into the light path from opposite positions in such a way that the ND density of the gradation ND region in the light path gradually increases so as to attenuate the amount of transmitted light.
(4) Each of the filter members has a highest density region where the density is uniform, and the highest density region will not be inserted into the light path.
(5) When the gradation ND region is inserted until the highest density portion enters the light path, the ND density of one of the filter members is 0.5 to 1.0 at the center of the light path, and the length of the gradation ND region in the gradation direction is 1.0 to 2.0 times the length necessary for covering the light path.
(6) In the example described in (1) or (3), phase difference of the light having a predetermined wavelength λ that passes through the border between the gradation ND region and the transparent region is smaller than or equal to λ/10.

The examples described in (1) to (6) are only a few examples of the light amount adjuster according to an embodiment of the invention, and the light amount adjuster according to an embodiment of the invention can of course be implemented by other examples.

The imaging apparatus according to an embodiment of the invention includes a lens, a light amount adjuster and an imaging device. The light amount adjuster includes two filter members, each having a gradation ND region where the transmittance continuously changes, disposed such that the two filter members face each other and the direction in which the gradation of one of the filter members changes differs from the direction in which the gradation of the other one of the filter members changes and configured such that the filter members can move in a symmetrical manner with respect to each other.

Therefore, the imaging apparatus according to this embodiment of the invention can prevent diffraction caused by a small aperture size of an aperture stop.

The imaging apparatus according to this embodiment of the invention can be implemented in the following examples.
(1) Each of the filter members has a transparent region where the transmittance is uniform and at least 80%. To provide the highest transmittance, the transparent regions of the two filter members overlap each other and cover the entire light path.
(2) Each of the filter members has a lowest density region where the transmittance is uniform and 80% or lower. To provide the highest transmittance, the two filter members are both retracted from the light path.
(3) Each of the filter members has a lowest density region where the transmittance is uniform and 80% or lower and a transparent region where the transmittance is uniform and at least 80%. To provide the highest transmittance, the transparent regions of the two filter members overlap each other and cover the entire light path. To limit the amount of transmitted light, the lowest density region of one or both of the filter members is inserted into the light path to cover the entire light path, and then, the gradation ND regions of the two filter members are inserted into the light path from opposite positions in such a way that the ND density of the gradation ND region in the light path gradually increases so as to attenuate the amount of transmitted light.
(4) The imaging apparatus further includes a color separation prism, and the light amount adjuster is disposed such that the gradation direction of the gradation ND region coincides with the color separation direction of the prism.
(5) The lens having an aperture stop formed of a plurality of diaphragm blades, the light amount adjuster, a color separation prism, and the imaging device are disposed in this order from the object side.
(6) The removable lens having an aperture stop formed of a plurality of diaphragm blades, a fixed parallel planar member including one of protective glass, an optical low-pass filter and an infrared-cut filter, the light amount adjuster, a color separation prism and the imaging device are disposed in this order from the object side.
(7) In the example described in (5) or (6), the imaging apparatus further includes a programmed AE data storage unit that stores preferable combinations of an F-number defined by the aperture stop and the amount of transmitted light controlled by the light amount adjuster, and extracts one of the preferable combinations from the programmed AE data storage unit based on an output signal from the imaging device to set the aperture stop and the light amount adjuster according to the preferable combination.
(8) In the example described in (5) or (6), the imaging apparatus further includes a programmed AE data storage unit that stores preferable combinations of an F-number defined by the aperture stop, the amount of transmitted light controlled by the light amount adjuster, and the shutter speed of an electronic shutter, and extracts one of the preferable combinations from the programmed AE data storage unit based on an output signal from the imaging device to set the aperture stop, the light amount adjuster and the electronic shutter according to the preferable combination.
(9) In the example described in (7) or (8), each of the filter members has a transparent region where the transmittance is uniform and at least 80%. To provide the highest transmittance, the transparent regions of the two filter members overlap each other and cover the entire light path. The F-number and/or the electronic shutter is set and at the same time the filter members are moved according to the transition of subject brightness, so that the position at which the borders between the transparent regions and the gradation ND regions of the two filter members approach each other and the vicinity of this position will not stop in the light path.
(10) In the example described in (7) or (8), each of the filter members has a lowest density region where the transmittance is uniform and 80% or lower. To provide the highest transmittance, the two filter members are both retracted from the light path. When the lowest density regions are inserted into and removed from the light path, the F-number and/or the electronic shutter is set and at the same time the filter members are moved according to the transition of subject brightness, so that the front ends of the filter members will not stop in the light path.
(11) In the example described in (7) or (8), each of the filter members has a lowest density region where the transmittance is uniform and 80% or lower and a transparent region where the transmittance is uniform and at least 80%. To provide the highest transmittance, the transparent regions of the two filter members overlap each other and cover the entire light path. To limit the amount of transmitted light, the lowest density region of one or both of the filter members is inserted into the light path to cover the entire light path, and then, the gradation ND regions of the two filter members are inserted into the light path from opposite positions in such a way that the ND density of the gradation ND region in the light path gradually increases so as to attenuate the amount of transmitted light. When the lowest density regions are inserted into and removed from the light path, the F-number and/or the electronic shutter is set and at the same time the filter members are moved according to the transition of subject brightness, so that the borders between the transparent regions and the lowest density regions of the filter members will not stop in the light path.
(12) In the example described in (7) or (8), the F-number defined by the aperture stop formed of a plurality of diaphragm blades can be arbitrarily set by an external operation, and according to the transition of subject brightness, the light amount adjuster is set to provide the amount of transmitted light corresponding to the arbitrarily set F-number, or the light amount adjuster and the electronic shutter are set to provide the combination of the amount of transmitted light and the shutter speed of the electronic shutter corresponding to the arbitrarily set F-number.
(13) In the example described in (1) or (3), phase difference of the light having a predetermined wavelength λ that passes through the border between the gradation ND region and the transparent region is smaller than or equal to λ/10.

The examples described in (1) to (13) are only a few examples of the imaging apparatus according to an embodiment of the invention, and the imaging apparatus according to an embodiment of the invention can of course be implemented by other examples.

Embodiments of the invention will now be described in more detail.

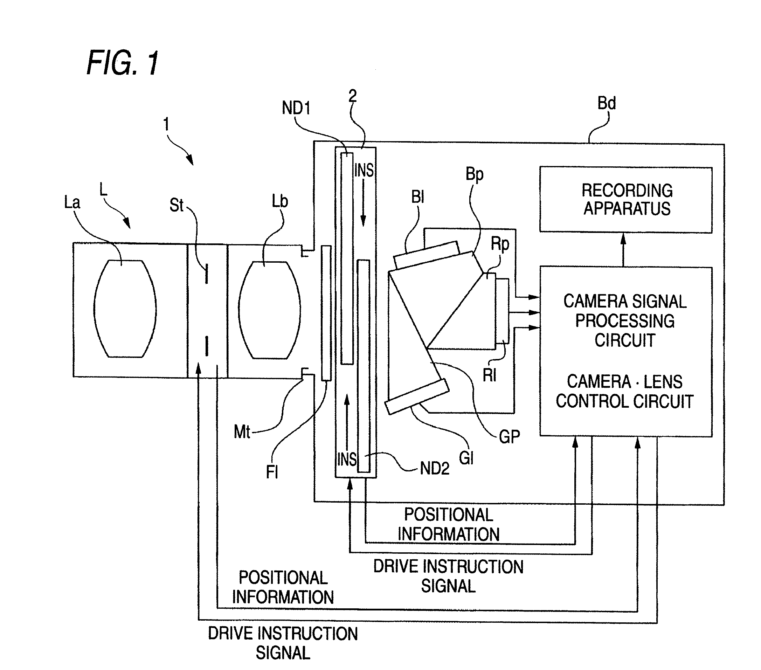

Fig. 1 schematically shows the imaging apparatus according to a first embodiment of the invention.

The imaging apparatus 1 includes a lens L, a light amount adjuster 2 and imaging devices GI, BI and RI. The light amount adjuster 2 includes two filter members ND1 and ND2 disposed such that they face each other and can symmetrically move with respect to each other, each of the filter members having a gradation ND region where the transmittance continuously changes and a transparent region where the transmittance is uniform and at least 80%. The light amount adjuster 2 is also configured such that in order to provide the highest transmittance, the transparent regions of the two filter members overlap each other and cover the entire light path, while in order to limit the amount of transmitted light, the gradation ND regions are symmetrically inserted into the light path from opposite positions in such a way that the ND density of the gradation ND region in the light path gradually increases so as to attenuate the amount of transmitted light.

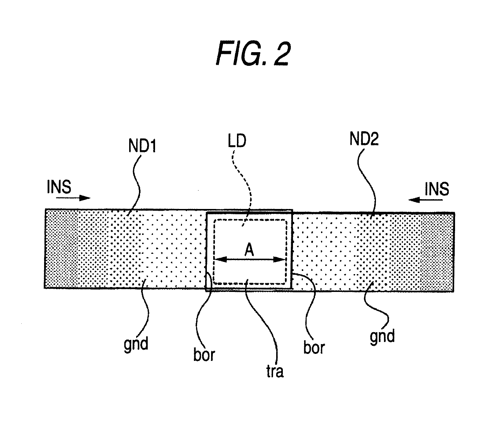

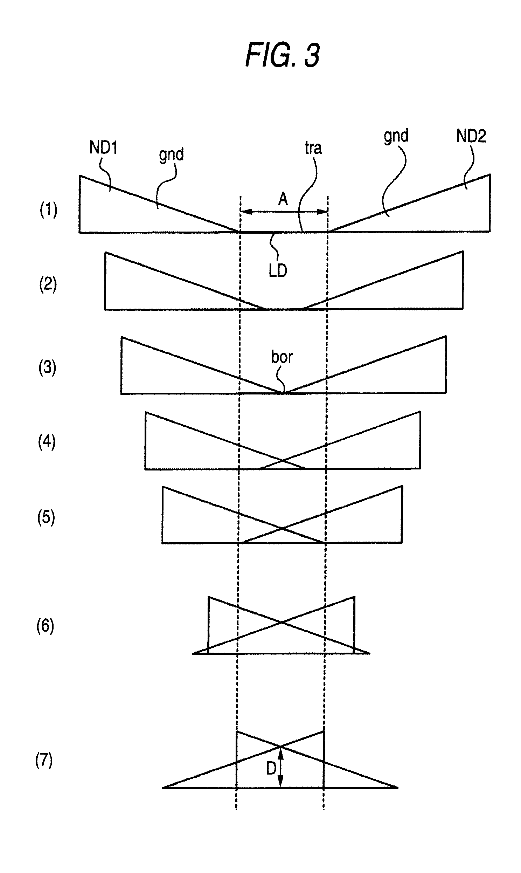

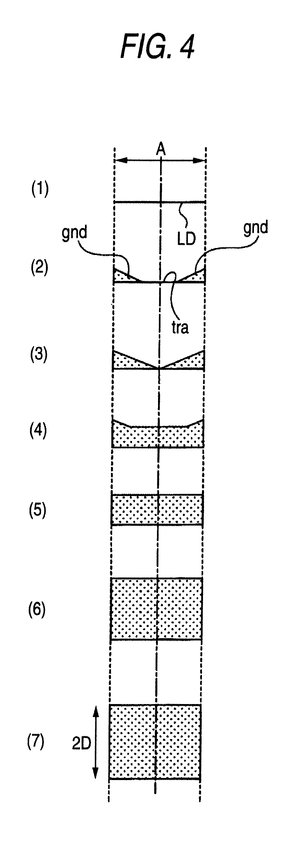

Fig. 2 diagrammatically shows the state where the filter members ND1 and ND2 according to the first embodiment cover the light path LD indicated by the broken line when viewed in the direction in which the light path LD extends. Fig. 3 diagrammatically shows how the gradation ND filters ND1 and ND2 are progressively inserted into the width A of the light path LD shown in Fig. 2 in such a way that the low density region is first inserted, followed by higher density regions. Fig. 4 shows the distribution of ND density versus position in the width A of the light path LD. The numbers (1) to (7) labeled in the left part of Fig. 3 correspond to the numbers (1) to (7) labeled in the left part of Fig. 4, and the same numbers indicate the same condition. In Fig. 3, the ND density is expressed by the height of the triangle, indicating that the higher the height, the higher the density. The portion indicated only by a line is transparent. Fig. 4 shows the sum of the overlapping areas of the triangles within the width A of the light path LD in Fig. 3, indicating that the larger the area, the higher the ND density.

In the state (1) in Figs. 3 and 4, the gradation ND regions gnd of the two gradation ND filters ND1 and ND2 are both retracted from the light path LD, so that the overlapping transparent regions tra cover the light path LD to provide the highest transmittance. In the state (2), the gradation ND regions gnd are slightly inserted into the light path LD. For example, when the filter members ND1 and ND2 are configured such that they are inserted and removed in the vertical direction of the screen, the light at the upper and lower parts of the light path LD will be attenuated. In the state (3), the borders bor between the transparent regions tra and the gradation ND regions gnd of the two gradation ND filters ND1 and ND2 come into contact with each other at the center of the light path LD, so that the distribution of density versus position becomes a V-like shape (see (3) in Fig. 4). In the state (4), part of the gradation ND regions gnd overlap each other in the light path LD. When the gradients of the density distributions are symmetric with respect to each other, the density distribution at the overlapping portion becomes flat. In the states (5) to (7), the transparent regions tra are completely retracted from the light path LD, so that the density distribution becomes flat across the light path. When the two filter members ND1 and ND2 are symmetrically moved, that is, moved in opposite directions with respect to each other, until the highest density portions are inserted in the light path LD, the two filter members ND1 and ND2 provide the highest density 2D across the light path LD, where D is the density of one of the filter members ND1 and ND2 at the center of the light path LD.

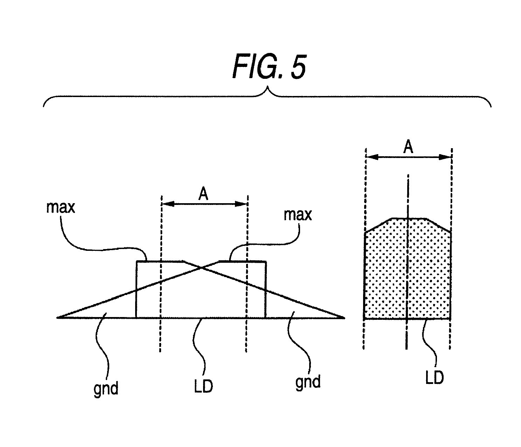

Although each of the filter members ND1 and ND2 may have a uniform, highest density region max that follows the gradation ND region gnd, the uniform, highest density region max is desirably controlled not to be inserted in the light path LD. Fig. 5 explains the effect in such a case. The left part of Fig. 5 corresponds to Fig. 3, and the right part of Fig. 5 corresponds to Fig. 4. In such a case, the density is highest at the center of the light path LD, and the density is lower at the sides where the filter members are inserted. When a light beam to be focused passes a portion including a high density portion and a low density portion, a certain intensity distribution is generated in a blurred point source image, resulting in so-called double-line blurring. Since consumer video camcorders generally employ contrast-based autofocus, a subject image that suffers from double-line blurring likely causes malfunction of the autofocus. In color separation prism-based video camcorders, the intensity of the light with a larger angle of incidence with respect to the dichroic plane becomes higher, which likely causes color unevenness.

It is desirable that when the gradation ND region gnd is inserted until the highest density portion enters the light path, the ND density D of one of the filter members ND1 and ND2 is 0.5 to 1.0 at the center of the light path and the length of the gradation ND region gnd in the insertion direction INS (see Fig. 2) is 1.0 to 2.0 times the length A necessary for covering the light path LD. The ND density means that the transmittance is the reciprocal of the (ND density)-th power of 10. The highest ND density used in representative three-plate cameras presently commercially available is about 1.5 to 1.8. Although the sensitivity of imaging devices will be increasingly higher, it is anticipated that significant improvement in sensitivity may not be achievable. Therefore, it is considered that the ND density necessary for preventing diffraction due to a small aperture size will not be significantly high. Regarding the spatial frequency on the imaging device corresponding to the TV resolution on the output screen, a smaller screen dimension of the imaging device may require higher MTF than ever at high spatial frequencies. Consequently, the F-number of the stopped-down aperture determined by the diffraction limit may not be larger, so that it is anticipated that the light amount control will depend on a light amount adjuster instead of an aperture stop. However, in consideration of the anticipated limitation of reduction in the pixel pitch, it is speculated that an extremely miniaturized screen will not be realized. Therefore, a reasonable density D to obtain the highest density 2D will be about 0.5 to 1.0. Although the width of the gradation ND region gnd necessary for obtaining flat density distribution is at least 1.0 time the width A of the light path, a width twice the width A or larger increases the travel of the filter members ND1 and ND2, resulting in an increased size of a driving apparatus of the filter members and hence an increased size of the entire imaging apparatus.

When the light amount adjuster 2 described above is applied to the imaging apparatus 1 using color separation prisms GP, BP and RP, the direction in which the gradation ND regions gnd of the filter members ND1 and ND2 are inserted desirably coincides with the direction in which the prisms separate color. In the imaging apparatus 1 using the color separation prisms GP, BP and RP, it is a well known phenomenon that a blurred image of a point source on the optical axis shows color unevenness of green and magenta in the circle of confusion. The reason of this is that, for example, when color separation is carried out in the vertical direction, the angle of incidence of the upper light incident on the color separating dichroic plane differs from that of the lower light incident on the dichroic plane, resulting in different spectral characteristics. To eliminate the cause of the color unevenness present in the upper and lower parts, the direction in which the gradation ND filters ND1 and ND2 are inserted into the light path LD is designed to coincide with the direction in which color separation is carried out so as to symmetrically reduce the cause of deviation to green and the cause of deviation to magenta, allowing reduction in change in white balance and occurrence of color unevenness observed in a blurred point source image. In the imaging apparatus 1 shown in Fig. 1, the direction in which the gradation ND filters ND1 and ND2 are inserted into the light path LD and the direction in which color separation is carried out are both parallel to the plane of the figure.

To take advantage of the feature of the imaging apparatus 1 according to an embodiment of the invention, the imaging apparatus 1 desirably includes the lens L having an aperture stop St formed of a plurality of diaphragm blades, the light amount adjuster 2 described above, the color separation prisms GP, BP and RP, and the imaging devices GI, BI and RI in this order from the object side. Although JP-A-52-117127, JP-A-6-265971, JP-A-2004-205951 and JP-A-2003-241253 propose that the gradation ND filters are disposed at the same position as the aperture stop, in the light amount adjuster according to an embodiment of the invention, two gradation ND filters are disposed such that they face each other and symmetrically move along a long distance path, so that the cross-sectional area of the light amount adjuster perpendicular to the optical axis becomes inevitably large. When such a large-sized light amount adjuster is disposed at the aperture of the stop, only the intermediate portion of the lens is thick, resulting in troubles in designing the lens tube mechanism, degraded usability and poor exterior appearance. Therefore, the light amount adjuster 2 is desirably disposed between the lens L and the color separation prisms GP, BP and RP where space can be relatively easily available.

Alternatively, the imaging apparatus 1 desirably includes a removable lens L having an aperture stop St formed of a plurality of diaphragm blades, a fixed parallel planar member F1 including one of protective glass, an optical low-pass filter and an infrared-cut filter, the light amount adjuster 2 described above, the color separation prisms GP, BP and RP, and the imaging devices GI, BI and RI in this order from the object side. In the case of a lens exchangeable imaging apparatus capable of switching between a plurality of lenses, the light amount adjuster 2 that may be formed of thin filters or may include a movement mechanism sensitive to an external force is prone to failure, if the user can touch the light amount adjuster 2 when the lens is removed. Therefore, the fixed parallel planar member F1 including one of protective glass, an optical low-pass filter and an infrared-cut filter is desirably disposed at the entrance of the light path on the body Bd side so as to protect the light amount adjuster 2 disposed behind the fixed parallel planar member F1 when the lens is removed. The imaging apparatus 1 shown in Fig. 1 is configured such that an exchanger mount Mt, although its detailed structure is not shown, allows the lens L to be attached and detached. The fixed parallel planar member F1 including one of protective glass, an optical low-pass filter and an infrared-cut filter is disposed at the entrance of the light path of the body Bd to protect the light amount adjuster 2. Since the flange focal distance in the body Bd is preferably as short as possible from the lens design point of view, it is further preferable to dispose the fixed parallel planar member F1 having an optical low-pass filter and an infrared-cut filter joined with each other.

It is desirable to achieve programmed AE (Automatic Exposure) by storing preferable combinations of an F-number controlled by the aperture stop St and the amount of transmitted light controlled by the light amount adjuster 2 and using one of the preferable combinations based on an output signal from the imaging device (for example, by providing a programmed AE data storage unit (memory) in which the preferable combinations are stored in advance and referring data stored in the programmed AE storage unit based on the output signal from the imaging device to set the aperture stop and the light amount adjuster according to the preferred combination). In the exposure adjustment operation for a video camcorder of related art using commercially available color separation prisms, the user switches among ND filters that provide two or three stepwise density levels and uses a combination of the amount of transmitted light attenuated by the selected ND filter and a F-number controlled by the aperture stop so as to adjust the stop within a range where degradation in image quality due to diffraction is acceptable. In this case, even when the stop is set to the AE position and hence adjusted by the camera, extremely narrow variable range of the F-number forces the user to frequently switch among the ND filters. Employing AE that automatically adjusts the light amount adjuster according to an embodiment of the invention and the stop eliminates the burden of ND filter switching from the user, allowing a hard-to-operate video camcorder for professional use to have usability similar to that of a user-friendly video camcorder for consumer use.

It is also desirable to achieve programmed AE by storing preferable combinations of not only an F-number and the amount of transmitted light but also an electronic shutter and using one of the preferable combinations based on the output signal from the imaging device.

When the border bor between the transparent region tra and the gradation ND region gnd of the filter member ND1 approaches the border bor between the transparent region tra and the gradation ND region gnd of the filter member ND2, the distribution of ND density along the direction in which the filter members ND1 and ND2 are inserted becomes a V-like shape. This state will be hereinafter referred to as a V-shape state. It is desirable to achieve programmed AE configured such that the filter members will not stop in the vicinity of the V-shape state by setting the F-number and/or the electronic shutter and simultaneously moving the filter members according to the transition of subject brightness.

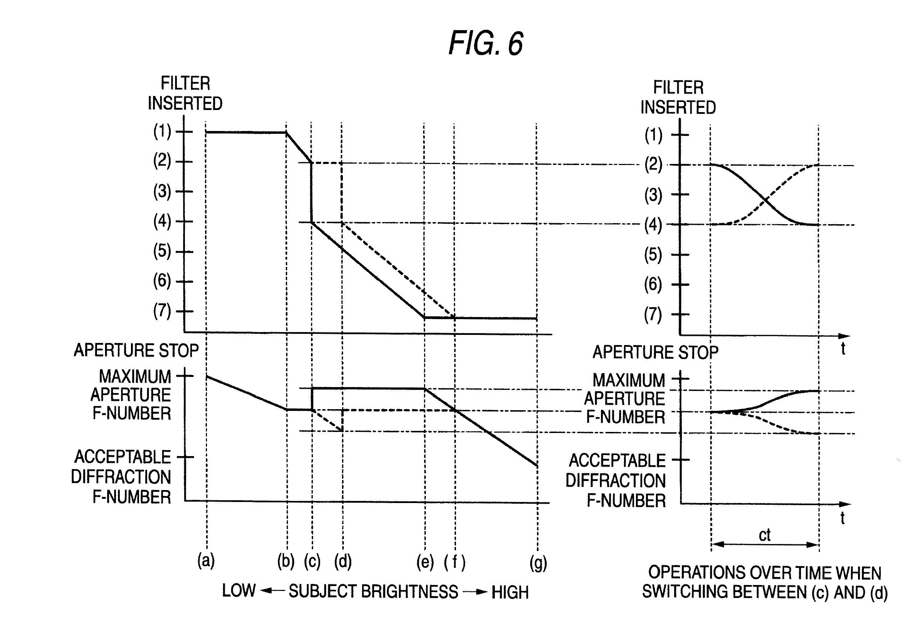

Fig. 6 shows an example diagrammatically illustrating preferable combinations of the F-number and the amount of transmitted light. In the two upper and lower graphs in the left part of Fig. 6, the horizontal axis indicates subject brightness. The numbers (1) to (7) next to the vertical axis of the upper left graph correspond to the numbered states in Figs. 3 and 4 indicating the inserted filter members ND1 and ND2. The vertical axis of the lower left graph indicates F-numbers of the aperture stop including the full-aperture F-number and the limit F-number at which degradation in image quality due to diffraction is still acceptable. The common horizontal axis for the two left graphs indicates the subject brightness from low brightness (a) to high brightness (g). Program charts are expressed by solid lines along the subject brightness making a transition from a low level to a high level, and only portions of the program different from the solid lines when the subject brightness makes a transition from a high level to a low level are shown by broken lines.

These two graphs are used to explain a preferable example of the programmed AE. In the state (a), the gradation ND regions gnd are retracted from the light path LD and the stop is fully open, so that the amount of transmitted light is highest. In general, aberrations will less affect the performance of a lens and hence the image quality will be improved when the F-number is slightly smaller than the full-aperture F-number. Therefore, the stop is set to the state (b) where the aperture size is slightly smaller than the full-aperture size, while the filter members ND1 and ND2 are left stationary. Then, the stop is left stationary at the appropriate F-number and the gradation ND regions gnd are inserted into the light path LD to achieve the state (2). Let (c) be the subject brightness in the state (2). Thereafter, the filter members ND1 and ND2 are inserted at one stroke to the state (4). At the same time, the stop is opened up such that the illuminance on the image plane will not change. JP-A-2004-205951 suggests that wavefront phase difference resulting from the step of the deposited film at the border between the transparent region and the gradation ND region causes degradation in image quality. When two filters are used, the two steps of the filter members ND1 and ND2 approach each other at the center of the light path LD in the V-shape state (3). Therefore, it is anticipated that degradation in image quality due to the phase difference most likely occurs. To prevent long-exposure imaging in the V-shape state (3), the filter members ND1 and ND2 as well as the diaphragm blades are simultaneously driven such that the filter members ND1 and ND2 will pass through the V-shape state (3) in a short period of time, so as to move the filter members ND1 and ND2 through the V-shape state (3) at one stroke. The two right graphs show how the filter members ND1 and ND2 as well as the stop are driven in the above operation as a function of time (the horizontal axis). The states indicating the inserted filter members ND1 and ND2 and the states of the stop in the right respective graphs correspond to those in the left graphs by connecting both sides with the two-dot chain lines. During an appropriately short period of time ct, the operation of deeply inserting the filter members ND1 and ND2, which reduces the amount of transmitted light, and the operation of opening up the stop to increase the amount of light are coordinated such that the overall illuminance on the image plane will not change. It has been experimentally found that the time ct spent for the coordinated switching is preferably 0.2 to 1.5 seconds. Time shorter than 0.2 seconds likely results in an error of the coordinated operation designed not to change the overall illuminance on the image plane, while time longer than 1.5 seconds results in noticeable delay of AE tracking when applied to scenes where the subject brightness sharply changes. It has also been found that the charts in the right graphs preferably make a transition like a sinusoidal curve. When the subject brightness is even higher, since the F-number desirably stays within an appropriate range where aberrations due to the full aperture and diffraction due to a small aperture will not greatly affect image quality, the stop is left stationary, while the filter members ND1 and ND2 are inserted further deeper into the light path LD to adjust the amount of light when the subject brightness changes from (c) to (e). In the regions (5) to (7) in the upper left graph, the light amount adjuster 2 provides an ideal performance in which the distribution of ND density in the light path LD is flat and only the overall density changes, that is, an effect similar to the electrochromic effect described in JP-A-6-90403 and JP-A-2006-3437 is provided. After the filter members ND1 and ND2 reach their highest density, the filter members ND1 and ND2 will be left stationary and the stop is closed down to the acceptable diffraction F-number for handling high-brightness (g) subjects.

Next, a description will be made of a preferable program for subject brightness changing from the high brightness (g) to lower brightness. From (g) to (f), the stop is opened up by following the combination opposite to that described above while the ND density is fixed at the highest value. At the position (f) where the aperture size is smaller than that in (e), the stop is fixed and the state is changed from (7) to (4) such that the transmittance of the filter members ND1 and ND2 increases (the broken line in the lower left graph). The subject brightness at this point is (d). Then, the filter members ND1 and ND2 are moved from the state (4) to the state (2) at one stroke, while the stop is slightly closed down such that the illuminance on the image plane stays unchanged. The subject brightness (d) is higher than (c), which is used when the subject brightness makes a transition to the higher brightness side. The transition indicated by the broken lines in the two right graphs shows how the filter members ND1 and ND2 as well as the stop are simultaneously driven at the brightness (d) as a function of time (the horizontal axis). The filter members ND1 and ND2 are moved in coordination with the stop in the short period of time ct such that the filter members ND1 and ND2 will not stay in the V-shape state (3). Hysteresis behavior between the brightness (c), which is used when the brightness makes a transition to the high brightness side, and the brightness (d), which is used when the brightness makes a transition to the low brightness side, prevents hunting and malfunction. From (d) to (c), the filter members ND1 and ND2 are left stationary and the stop is opened up. From (c) to (b), the stop is left stationary and the gradation ND regions gnd of the filter members ND1 and ND2 are retracted from the light path LD. Then, from (b) to (a), the stop is opened up according to the subject brightness and reaches the full-aperture state.

In Fig. 6 showing various subject brightness, for a brighter subject than the highest subject brightness (g) determined by the acceptable diffraction F-number and the highest ND density (7) for typical exposure time, the programmed AE is desirably configured such that the control is automatically taken over by a fast electronic shutter.

In the imaging apparatus 1 according to an embodiment of the invention, there is provided aperture-priority AE in which the user arbitrarily sets the F-number that is controlled by the aperture stop St formed of a plurality of diaphragm blades and only the amount of transmitted light that is controlled by the light amount adjuster 2 is used or the combination of the amount of transmitted light that is controlled by the light amount adjuster 2 and the electronic shutter is used. Since the light amount adjuster described above can continuously change the density from a substantially transparent state to an ND density of about 2.0, priority can be placed on expressions using pan focusing or blurring obtained by utilizing the depth of field of the lens, producing a variety of image expression effects.

Furthermore, phase difference of the light having a predetermined wavelength λ that passes through the border bor between the gradation ND region gnd and the transparent region tra is desirably smaller than or equal to λ/10. In programmed AE, it is easy to prevent recording for a long period of time in the V-shape state (3) shown in Fig. 3. In the exposure-priority AE described above, however, it is necessary to effectively use all states (1) to (7) shown in Fig. 3 for the AE control. JP-A-2004-205951 suggests that in order to reduce degradation in image quality due to wavefront phase difference resulting from one filter within an acceptable range, it is reasonable to reduce the wavefront phase difference due to the step of the deposited film present at the border between the gradation ND region and the transparent region to λ/5 or smaller. Since two of the filter members are used in an embodiment of the invention, there may be two steps in the light path that cause phase difference in some cases. In the V-shape state in particular, since the steps responsible for phase difference approach each other, it is anticipated that the wavefront is likely disturbed. Therefore, as the condition that may be required for one filter member, it is desirable to further reduce the phase difference to λ/10, which is one-half the phase difference described in JP-A-2004-205951.

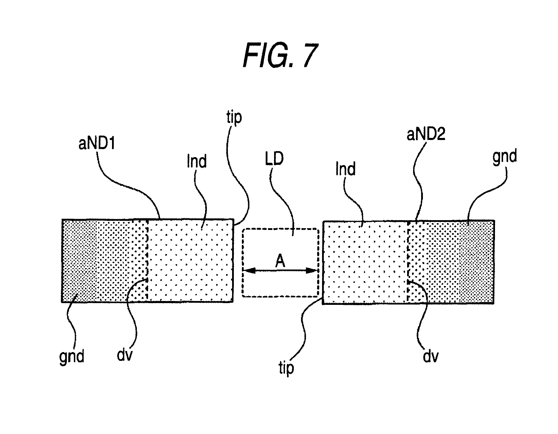

Fig. 7 shows filter members aND1 and aND2 according to a second embodiment used in the light amount adjuster 2. Each of the filter members aND1 and aND2 has a gradation ND region gnd where the transmittance continuously changes and a lowest density region Ind where the transmittance is uniform and 80% or lower.

In the light amount adjuster 2 using the filter members aND1 and aND2, the two filter members aND1 and aND2 are disposed such that they face each other and can symmetrically move with respect to each other. To provide the highest transmittance, the two filter members aND1 and aND2 are both retracted from the light path LD. To limit the amount of transmitted light, one or both of the lowest density regions Ind of the filter members aND1 and aND2 are inserted into the light path LD and cover the entire light path LD, and then, the gradation ND regions gnd are symmetrically inserted into the light path from opposite positions in such a way that the ND density of the gradation ND region gnd in the light path gradually increases so as to attenuate the amount of transmitted light.

In the light amount adjuster 2 using the filter members aND1 and aND2, when the lowest density regions Ind are inserted into and removed from the light path LD, it is desirable to achieve programmed AE in which the F-number and/or the electronic shutter is set and at the same time the filter members aND1 and aND2 are moved according to the transition of subject brightness such that the front ends tip of the filter members aND1 and aND2 will not stop in the light path LD.

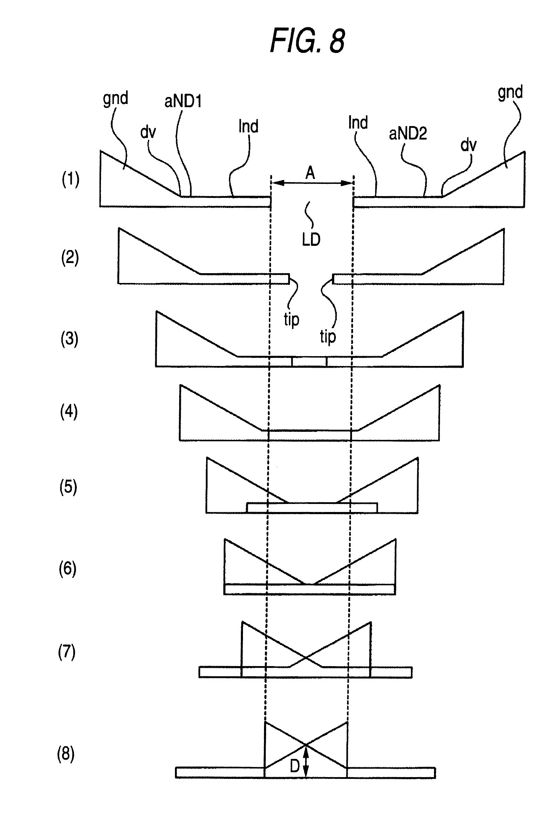

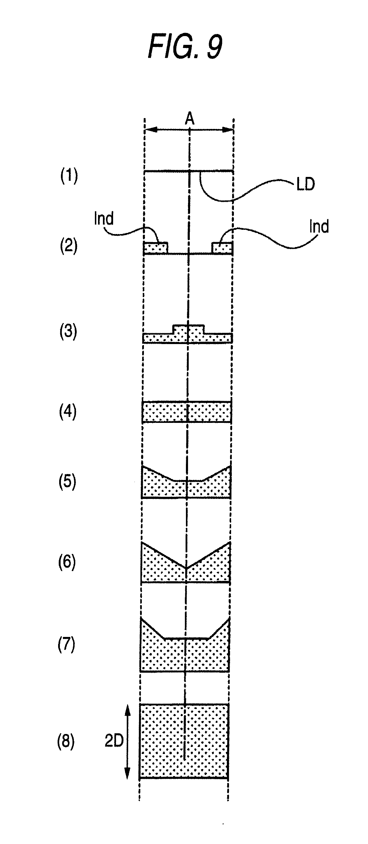

Fig. 7 diagrammatically shows the state where the filter members aND1 and aND2 are retracted from the light path LD indicated by the broken line. The lowest density region Ind having uniform density is situated on the closer side of the border line dv with no deposition-thickness step to the light path LD, and the gradation ND region gnd where the density changes from the lowest level to the highest level is situated on the far side of the border line dv from the light path LD. Fig. 8 diagrammatically shows how the lowest density regions Ind of the filter members aND1 and aND2 are inserted into the light path LD having the width A shown in Fig. 7 to cover the entire light path LD and then the gradation ND filters aND1 and aND2 are successively inserted from opposite positions in such a way that the low density region is first inserted, followed by higher density regions. Fig. 9 shows the distribution of ND density versus position in the width A of the light path LD. The numbers (1) to (8) labeled in the left part of Fig. 8 correspond to the numbers (1) to (8) labeled in the left part of Fig. 9. Figs. 7, 8 and 9 are expressed in a way similar to the way Figs. 2, 3 and 4 are expressed, respectively.

In the state (1) in Figs. 8 and 9, the two filter members aND1 and aND2 are both retracted from the light path LD, so that the highest transmittance is provided. In the state (2), the lowest density regions Ind are slightly inserted into the light path LD. For example, when the filter members aND1 and aND2 are configured such that they are inserted and removed in the vertical direction of the screen, the light at the upper and lower parts of the light path LD will be attenuated. In the state (3), part of the lowest density regions Ind of the two filter members aND1 and aND2 overlap each other at the center of the light path LD, so that the distribution of density versus position has a dark band at the center of the light path LD. In the state (4), the two lowest density regions Ind overlap each other, so that the density distribution becomes flat. In the state (5), the gradation ND regions gnd that follow the lowest density regions Ind are slightly inserted into the light path LD. For example, when the filter members aND1 and aND2 are configured such that they are inserted and removed in the vertical direction of the screen, the light at the upper and lower parts of the light path LD will be attenuated. In the state (6), the borders dv between the lowest density regions Ind and the gradation ND regions gnd of the two filter members aND1 and aND2 come into contact with each other at the center of the light path LD, so that the distribution of density versus position becomes a V-like shape. In the state (7), part of the gradation ND regions gnd overlap each other in the light path LD. When the gradients of the density distributions are symmetric with respect to each other, the density distribution at the overlapping portion becomes flat. In the state (8), the lowest density regions Ind are completely retracted from the light path LD, so that the density distribution becomes flat across the light path LD. When the two filter members aND1 and aND2 are symmetrically moved with respect to each other until the highest density portions are inserted in the light path LD, the two filter members aND1 and aND2 provide the highest density 2D across the light path LD, where D is the density of one of the filter members aND1 and aND2 at the center of the light path LD.

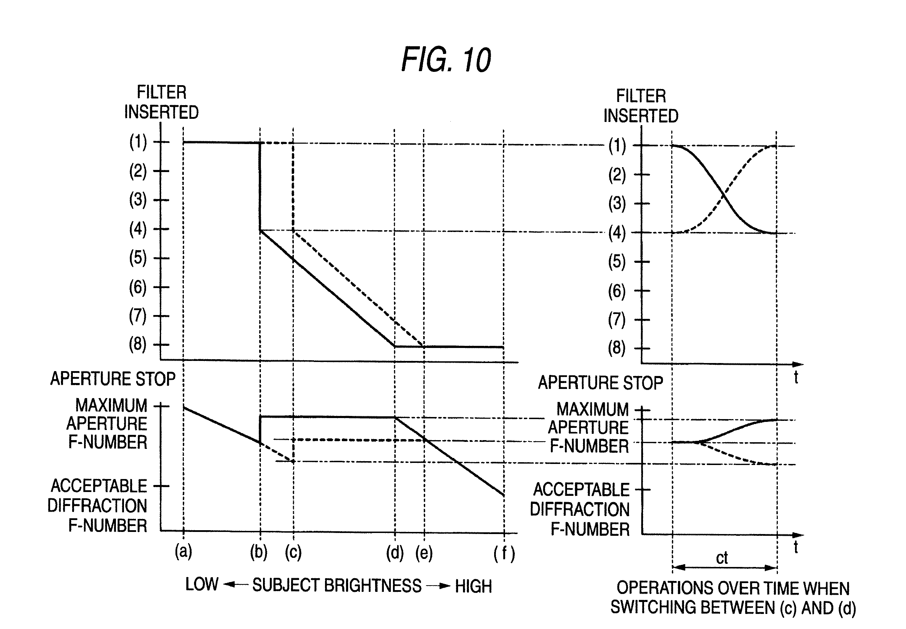

Fig. 10 shows an example diagrammatically illustrating preferable combinations of the F-number and the amount of transmitted light. In the two upper and lower graphs in the left part of Fig. 10, the horizontal axis indicates the subject brightness. The numbers (1) to (8) next to the vertical axis of the upper left graph correspond to the numbered states in Figs. 8 and 9 indicating the filter members aND1 and aND2 inserted into the light path LD. The vertical axis of the lower left graph indicates F-numbers of the aperture stop including the full-aperture F-number and the limit F-number at which degradation of image quality due to diffraction is still acceptable. The common horizontal axis for the two left graphs indicates the subject brightness from high brightness (a) to low brightness (f). Program charts are expressed by solid lines along the subject brightness making a transition from a low level to a high level, and only portions of the program different from the solid lines when the subject brightness makes a transition from a high level to a low level are shown by broken lines.

The two graphs shown in Fig. 10 are used to explain a preferable example of the programmed AE. In the state (a), the filter members aND1 and aND2 are retracted from the light path LD and the stop is fully open, so that the amount of transmitted light is highest. In general, aberrations will less affect the performance of a lens and hence the image quality will be improved when the F-number is slightly smaller than the full-aperture F-number. Therefore, the stop is set to the state (b) where the aperture size is slightly smaller than the full-aperture size, while the filter members aND1 and aND2 are left stationary. Then, the filter members aND1 and aND2 are inserted at one stroke to the state (4). At the same time, the stop is opened up such that the illuminance on the image plane will not change. JP-A-2004-205951 suggests that large transmitted wavefront phase difference resulting from the thickness of the filter base causes degradation in image quality. When two filters are used, the two lowest density regions Ind of the filters overlap each other at the center of the light path in the state (3). Therefore, there are two divided high-transmittance portions, causing two-line blurring, which may lead to malfunction of contrast-based autofocus. To prevent the adverse effect of the thickness of the filter base and the density distribution, it is necessary to change the state from (1) to (4) at one stroke. The two right graphs show how the filter members aND1 and aND2 as well as the stop are driven in the above operation as a function of time (the horizontal axis). The states indicating the inserted filter members aND1 and aND2 and the states of the stop in the right respective graphs correspond to those in the left graphs by connecting both sides. During an appropriately short period of time ct, the operation of deeply inserting the lowest density regions Ind of the two filter members aND1 and aND2 into the light path LD, which reduces the amount of light, and the operation of opening up the stop to increase the amount of light are coordinated such that the overall illuminance on the image plane will not change. When the subject brightness is even higher, since the F-number desirably stays within an appropriate range where aberrations due to the full aperture and diffraction due to a small aperture will not greatly affect image quality, the stop is left stationary, while the filter members aND1 and aND2 are inserted deeper until the gradation ND regions gnd are inserted to adjust the amount of light when the subject brightness changes from (b) to (d). After the filter members aND1 and aND2 reach their highest density, the filter members aND1 and aND2 will be left stationary and the stop is closed down to the acceptable diffraction F-number for handling high-brightness (f) subjects.

Next, a description will be made of a preferable program for subject brightness changing from the high brightness (f) to lower brightness. From (f) to (e), the stop is opened up by following the combination opposite to that described above while the ND density is fixed at the highest value. At the position (e) where the aperture size is smaller than that in (d), the stop is fixed and the state is changed from (8) to (4) such that the transmittance of the filter members aND1 and aND2 increases (the broken line in the lower left graph). The subject brightness at this point is (c). Then, the filter members aND1 and aND2 are moved from the state (4) to the state (1) at one stroke, while the stop is slightly closed down such that the illuminance on the image plane stays unchanged. The subject brightness (c) is higher than (b), which is used when the subject brightness makes a transition to the higher brightness side. The transition indicated by the broken lines in the two right graphs shows how the filter members aND1 and aND2 as well as the stop are simultaneously driven at the brightness (c) as a function of time (the horizontal axis). The filter members aND1 and aND2 are moved in coordination with the stop in the short period of time ct such that the open area together with one filter base or one filter base together with two filter bases will not stay in the region where image quality is degraded. Hysteresis behavior between the brightness (b), which is used when the brightness makes a transition to the high brightness side, and the brightness (c), which is used when the brightness makes a transition to the low brightness side, prevents hunting and malfunction. From (c) to (a), the filter members aND1 and aND2 are retracted out of the light path LD and left stationary, and the stop is opened up and reaches the full-aperture state.

This programmed AE is basically assumed to be used in the states (4) to (8). When the lowest density is an ND density of about 0.1, the ND density is 0.2 (transmittance of 63%) even in the state (4), so that the range from the subject brightness (b) or (c) to (f) can cover sufficiently wide brightness range. Only when the subject is extremely dim, the program changes the state to (1) at one stroke.

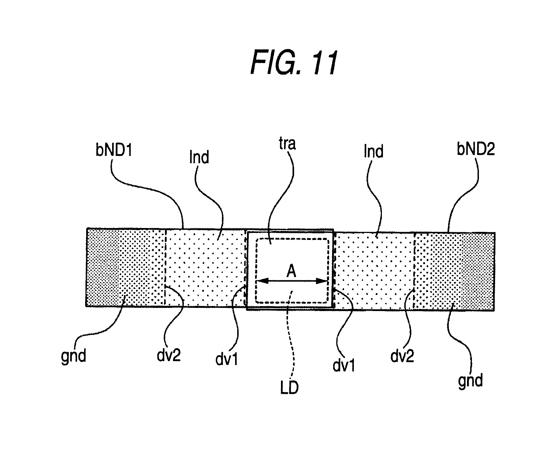

Fig. 11 shows filter members bND1 and bND2 according to a third embodiment used in the light amount adjuster 2. Each of the filter members bND1 and bND2 has a gradation ND region gnd where the transmittance continuously changes, a lowest density region Ind where the transmittance is uniform and 80% or lower and a transparent region tra where the transmittance is uniform and at least 80%.

In the light amount adjuster 2 using the filter members bND1 and bND2, the two filter members bND1 and bND2 are disposed such that they face each other and can symmetrically move with respect to each other. To provide the highest transmittance, the transparent regions tra of the two filter members bND1 and bND2 overlap each other and cover the entire light path LD. To limit the amount of transmitted light, one or both of the lowest density regions Ind of the filter members bND1 and bND2 are inserted into the light path LD and cover the entire light path LD, and then, the gradation ND regions gnd are symmetrically inserted into the light path LD from opposite positions in such a way that the ND density of the gradation ND region gnd in the light path gradually increases so as to attenuate the amount of transmitted light.

In the light amount adjuster 2 using the filter members bND1 and bND2, when the lowest density regions Ind are inserted into and removed from the light path LD, it is desirable to achieve programmed AE in which the F-number and/or the electronic shutter is set and at the same time the filter members bND1 and bND2 are moved according to the transition of subject brightness such that the borders dv1 and dv2 between the transparent regions tra and the lowest density regions Ind of the filter members bND1 and bND2 will not stop in the light path LD.

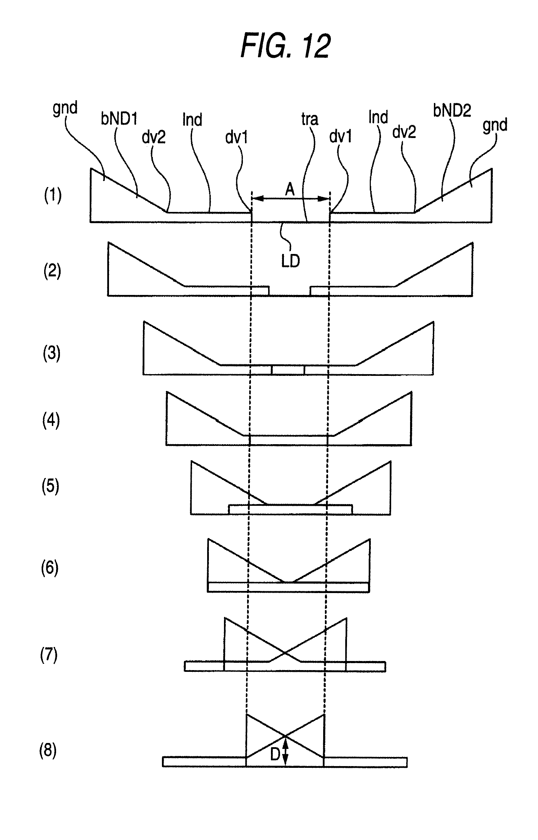

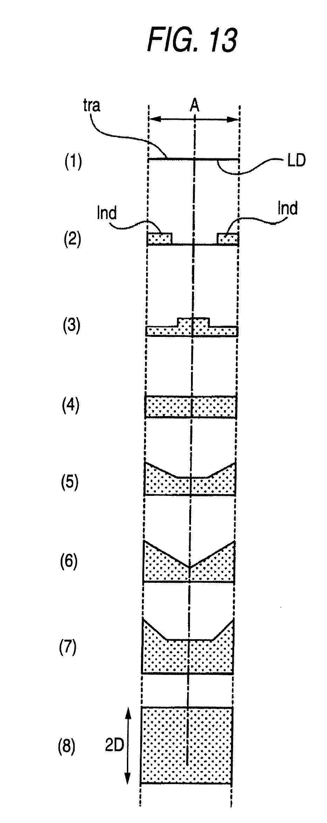

Fig. 11 diagrammatically shows the state where the transparent regions tra of the filter members bND1 and bND2 cover the light path LD indicated by the broken line. The area from the border dv1 to the border dv2 is the uniform, lowest density region Ind, and there is a step having the thickness of the deposited film at the border dv1, which is the portion that causes phase difference. There is no step of the deposited film at the border dv2, and the border dv2 is followed by the gradation ND region gnd where the density changes from the lowest level to the highest level. Fig. 12 diagrammatically shows how the lowest density regions Ind of the filter members bND1 and bND2 are inserted into the light path LD having the width A shown in Fig. 11 to cover the entire light path LD and then the gradation ND regions gnd are successively inserted from opposite positions in such a way that the low density region is first inserted, followed by higher density regions. Fig. 13 shows the distribution of ND density versus position in the width A of the light path LD. The numbers (1) to (8) labeled in the left part of Fig. 12 correspond to the numbers (1) to (8) labeled in the left part of Fig. 13. Figs. 11, 12 and 13 are expressed in a way similar to the way Figs. 2, 3 and 4 are expressed, respectively.

In the state (1) in Figs. 12 and 13, the transparent regions tra of the two filter members bND1 and bND2 cover the light path LD, so that the highest transmittance is provided. In the state (2), the lowest density regions Ind are slightly inserted into the light path LD. For example, when the filter members bND1 and bND2 are configured such that they are inserted and removed in the vertical direction of the screen, the light at the upper and lower parts of the light path LD will be attenuated. In the state (3), part of the lowest density regions Ind of the two filter members bND1 and bND2 overlap each other at the center of the light path LD, so that the distribution of density versus position has a dark band at the center of the light path LD. In the state (4), the lowest density regions Ind of the two filter members bND1 and bND2 overlap each other, so that the density distribution becomes flat. In the state (5), the gradation ND regions gnd that follow the lowest density regions Ind are slightly inserted into the light path LD. For example, when the filter members bND1 and bND2 are configured such that they are inserted and removed in the vertical direction of the screen, the light at the upper and lower parts of the light path LD will be attenuated. In the state (6), the borders dv2 between the lowest density regions Ind and the gradation ND regions gnd of the two filter members bND1 and bND2 come into contact with each other at the center of the light path LD, so that the distribution of density versus position becomes a V-like shape. In the state (7), part of the gradation ND regions gnd overlap each other in the light path LD. When the gradients of the density distributions are symmetric with respect to each other, the density distribution at the overlapping portion becomes flat. In the state (8), the lowest density regions Ind are completely retracted from the light path LD, so that the density distribution becomes flat across the light path LD. When the two filter members bND1 and bND2 are symmetrically moved with respect to each other until the highest density portions are inserted in the light path LD, the two filter members bND1 and bND2 provide the highest density 2D across the light path LD, where D is the density of one of the filter members bND1 and bND2 at the center of the light path LD.

Combinations of the transmittance and the F-number of programmed AE in the imaging apparatus 1 having the light amount adjuster 2 using the filter members bND1 and bND2 are the same as those shown in Fig. 10.

A description will be made of drive control of programmed AE or exposure-priority AE in the imaging apparatus 1 having the light amount adjuster 2 using any one of the three types of filter members ND1, ND2, aND1, aND2, bND1 and bND2 with reference to Fig. 1.

The aperture stop St formed of a plurality of diaphragm blades built in the lens L has a positional sensor and a drive device (not shown) that convey the F-number as positional information to a camera lens control circuit. The stop is driven based on a drive instruction signal from the camera lens control circuit. Such information is transmitted and driving power is supplied through an electric contact provided on the exchangeable lens mount Mt and a connection cable. The light amount adjuster 2 has a positional sensor and a drive device (not shown) that convey positional information on the filter members (ND1, ND2, aND1, aND2, bND1 and bND2) to the camera lens control circuit. The filter members are driven based on a drive instruction signal from the camera lens control circuit.

The camera lens control circuit has, for example, a read-only memory, to which a programmed AE chart, for example, shown in Figs. 6 and 10, are recorded in advance. A point on the programmed AE chart is selected based on output signals from the imaging devices (GI, BI and RI) (based on brightness information on the subject), and the aperture stop and the light amount adjuster is set to the state specified by the selected point.

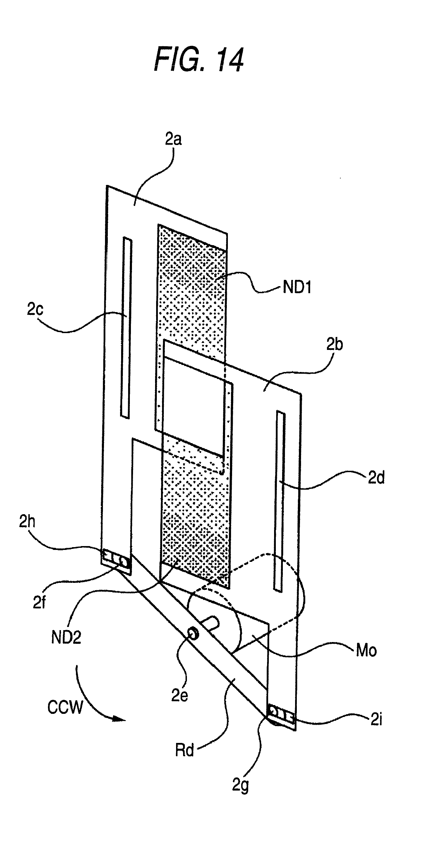

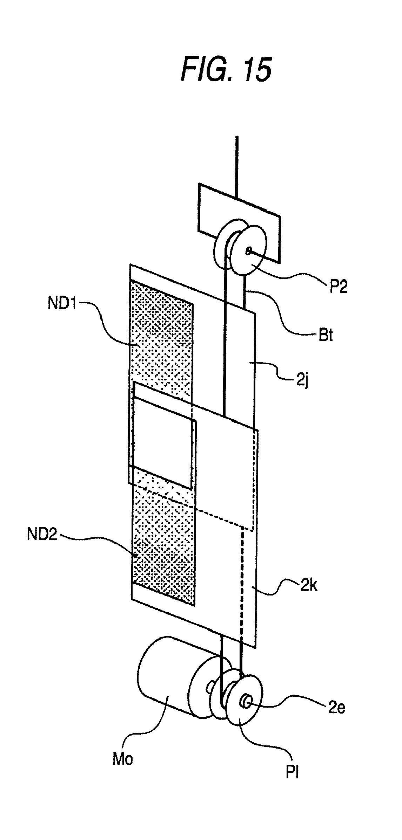

Figs. 14 and 15 show embodiments of a drive mechanism that symmetrically moves the two filter members in the light amount adjuster 2. In Figs. 14 and 15, the filter members ND1 and ND2 shown in Fig. 2 are used.

In Fig. 14, the two filter members ND1 and ND2 are disposed in a vertically symmetrical manner, and the filter members ND1 and ND2 is retained on filter retainers 2a and 2b, respectively, through bonding or the like. The filter retainers 2a and 2b are sandwiched and guided in a narrow space surrounded by two base plates (not shown) in such a way that the filter retainers have little play in the optical axis direction. Vertically elongated holes 2c and 2d provided in the filter retainers 2a and 2b engage guide pins (not shown) provided on the base plates, so that the filter retainers 2a and 2b are movably guided only in the vertical direction. The drive device Mo is a motor that is easily controlled, such as a stepper motor. The center of a rod Rd is fixed to the output shaft 2e of the motor, so that the rod Rd and the output shaft 2e rotate in an integrated manner. Connection pins 2f and 2g project from the tips of the rod Rd. The connection pins 2f and 2g engage elongated connection holes 2h and 2i that are elongated in the direction substantially perpendicular to the direction in which the elongated holes 2c and 2d in the filter retainers 2a and 2b extend, allowing power transmission.

Therefore, when the motor Mo is driven, the rod Rd rotates and the ends of the rod Rd move in opposite directions. For example, when the rod Rd rotates in the direction indicated by the arrow CCW, the connection pin 2f moves substantially downward, while the connection pin 2g moves substantially upward. Thus, the filter member ND1 moves downward, while the filter member ND2 moves upward. That is, the two filter members ND1 and ND2 will move in a symmetrical manner.

The drive mechanism shown in Fig. 14 is expected to provide a stable motion similar to that obtained by using a galvanometric motor to drive diaphragm blades in a video camcorder of related art and the like. A problem of this mechanism is that the travel of the filter members ND1 and ND2 is longer than that of the diaphragm blades, resulting in an increased length of the rod Rd and hence an increased width of the light amount adjuster 2.

In Fig. 15, the two filter members ND1 and ND2 are retained on filter retainers 2j and 2k, respectively. A drive pulley P1 is fixed to the output shaft 2e of the motor Mo described above. A driven pulley P2 is disposed on the opposite side to the drive pulley P1, for example, on the upper side. A belt Bt engages the two pulleys P1 and P2. Tension is applied to the driven pulley P2 by appropriate means (not shown), such as a spring, an elastic string and magnetic attractive force, in the direction away from the drive pulley P1 such that the belt Bt will not be loose. The filter retainers 2j and 2k are retained at the portions of the belt Bt that move in opposite directions.

Therefore, when the motor Mo is driven, the belt Bt moves between the pulleys P1 and P2. Consequently, one of the filter members ND1 and ND2 connected to the belt Bt moves downward, while the other moves upward. That is, the two filter members ND1 and ND2 will move in a symmetrical manner.

Use of the drive mechanism shown in Fig. 15 allows reduction in the width of the light amount adjuster 2.

The imaging apparatus 1 described above can take various forms as a specific product. For example, the imaging apparatus 1 can be broadly used as a camera unit of a video input/output apparatus, such as a digital video camcorder, a DVD video camcorder, a HDD video camcorder, a digital still camera and a surveillance video camcorder.

The imaging apparatus according to the embodiment of the invention and the light amount adjuster according to the embodiment of the invention described above are specific examples for practicing the invention, and various types of manufacturing methods and density distribution of the gradation ND filters are conceivable. The aperture stop and the light amount adjuster can be integrated from the design point of view.

The specific shapes and configurations of each unit shown in the above embodiments are only specific examples for practicing the invention, and the technological range of the invention should not be construed in a limiting sense by these specific shapes and configurations.

It should be understood by those skilled in the art that various modifications, combinations, sub-combinations and alterations may occur depending on design requirements and other factors insofar as they are within the scope of the appended claims or the equivalents thereof.

## Claims

1. A light amount adjuster comprising two filter members (ND1, ND2; aND1, aND2; bND1, bND2), each having a gradation ND region where the transmittance continuously changes, disposed such that the two filter members (ND1, ND2; aND1, aND2; bND1, bND2) face each other and the direction in which the gradation of one of the filter members (ND1, ND2; aND1, aND2; bND1, bND2) changes differs from the direction in which the gradation of the other one of the filter members (ND1, ND2; aND1, aND2; bND1, bND2) changes and configured such that the filter members (ND1, ND2; aND1, aND2; bND1, bND2) can move in a symmetrical manner with respect to each other.

2. The light amount adjuster according to claim 1, wherein each of the filter members (ND1, ND2) has a transparent region (tra) where the transmittance is uniform and at least 80%, and
to provide the highest transmittance, the transparent regions of the two filter members (ND1, ND2) overlap each other and cover the entire light path (LD).

3. The light amount adjuster according to claim 1, wherein each of the filter members (aND1, aND2) has a lowest density region (Ind) where the transmittance is uniform and 80% or lower, and
to provide the highest transmittance, the two filter members (aND1, aND2) are both retracted from the light path (LD).

4. The light amount adjuster according to claim 1, wherein each of the filter members (bND1, bND2) has a lowest density region (Ind) where the transmittance is uniform and 80% or lower and a transparent region (tra) where the transmittance is uniform and at least 80%,
to provide the highest transmittance, the transparent regions (tra) of the two filter members (bND1, bND2) overlap each other and cover the entire light path (LD), and
to limit the amount of transmitted light, the lowest density region (Ind) of one or both of the filter members (bND1, bND2) is inserted into the light path (LD) to cover the entire light path (LD), and then, the gradation ND regions (gnd) of the two filter members (bND1, bND2) are inserted into the light path (LD) from opposite positions in such a way that the ND density of the gradation ND region (gnd) in the light path gradually increases so as to attenuate the amount of transmitted light.

5. The light amount adjuster according to claim 1, wherein each of the filter members (ND1, ND2) has a highest density region where the density is uniform, and
the highest density region is not inserted into the light path (LD).

6. The light amount adjuster according to claim 1, wherein when the gradation ND region is inserted until the highest density portion enters the light path, the ND density of one of the filter members is 0.5 to 1.0 at the center of the light path, and
the length of the gradation ND region in the gradation direction is 1.0 to 2.0 times the length necessary for covering the light path.

7. The light amount adjuster according to claim 2 or 4, wherein phase difference of the light having a predetermined wavelength λ that passes through the border between the gradation ND region and the transparent region is smaller than or equal to λ/10.

8. An imaging apparatus comprising:
a lens (L);
a light amount adjuster (2); and
an imaging device (GI, BI, RI),
wherein the light amount adjuster (2) includes two filter members (ND1, ND2), each having a gradation ND region where the transmittance continuously changes, disposed such that the two filter members face each other and the direction in which the gradation of one of the filter members (ND1, ND2) changes differs from the direction in which the gradation of the other one of the filter members (ND1, ND2) changes and configured such that the filter members (ND1, ND2) can move in a symmetrical manner with respect to each other.

9. The imaging apparatus according to claim 8, wherein each of the filter members (ND1, ND2) has a transparent region (tra) where the transmittance is uniform and at least 80%, and
to provide the highest transmittance, the transparent regions of the two filter members (ND1, ND2) overlap each other and cover the entire light path.

10. The imaging apparatus according to claim 8, wherein each of the filter members (aND1, aND2) has a lowest density region where the transmittance is uniform and 80% or lower, and
to provide the highest transmittance, the two filter members (aND1, aND2) are both retracted from the light path (LD).

11. The imaging apparatus according to claim 8, wherein each of the filter members (bND1, bND2) has a lowest density region (Ind) where the transmittance is uniform and 80% or lower and a transparent region (tra) where the transmittance is uniform and at least 80%,
to provide the highest transmittance, the transparent regions (tra) of the two filter members (bND1, bND2) overlap each other and cover the entire light path (LD), and
to limit the amount of transmitted light, the lowest density region (Ind) of one or both of the filter members (bND1, bND2) is inserted into the light path (LD) to cover the entire light path (LD), and then, the gradation ND regions of the two filter members (bND1, bND2) are inserted into the light path (LD) from opposite positions in such a way that the ND density (gnd) of the gradation ND region in the light path gradually increases so as to attenuate the amount of transmitted light.

12. The imaging apparatus according to claim 8, further comprising a color separation prism (GP, BP, RP),
wherein the light amount adjuster (2) is disposed such that the gradation direction of the gradation ND region (gnd) coincides with the color separation direction of the prism (GP, BP, RP).

13. The imaging apparatus according to claim 8, wherein the lens (L) having an aperture stop (St) formed of a plurality of diaphragm blades, the light amount adjuster (2), a color separation prism (GP, BP, RP), and the imaging device (GI, BI, RI) are disposed in this order from the object side.

14. The imaging apparatus according to claim 8, wherein the removable lens (L) having an aperture stop (St) formed of a plurality of diaphragm blades, a fixed parallel planar member (F1) including one of protective glass, an optical low-pass filter and an infrared-cut filter, the light amount adjuster (2), a color separation prism (GP, BP, RP) and the imaging device (GI, BI, RI) are disposed in this order from the object side.

15. The imaging apparatus according to claim 13 or 14, further comprising a programmed AE data storage unit that stores preferable combinations of an F-number defined by the aperture stop (St) and the amount of transmitted light controlled by the light amount adjuster (2),
wherein the imaging apparatus extracts one of the preferable combinations from the programmed AE data storage unit based on an output signal from the imaging device (GI, BI, RI) to set the aperture stop (St) and the light amount adjuster (2) according to the preferable combination.

16. The imaging apparatus according to claim 13 or 14, further comprising a programmed AE data storage unit that stores preferable combinations of an F-number defined by the aperture stop (St), the amount of transmitted light controlled by the light amount adjuster (2), and the shutter speed of an electronic shutter,
wherein the imaging apparatus extracts one of the preferable combinations from the programmed AE data storage unit based on an output signal from the imaging device (GI, BI, RI) to set the aperture stop (St), the light amount adjuster (2) and the electronic shutter according to the preferable combination.

17. The imaging apparatus according to claim 15 or 16, wherein each of the filter members (ND1, ND2) has a transparent region (tra) where the transmittance is uniform and at least 80%,
to provide the highest transmittance, the transparent regions of the two filter members (ND1, ND2) overlap each other and cover the entire light path (LD), and
the F-number and/or the electronic shutter is set and at the same time the filter members (ND1, ND2) are moved according to the transition of subject brightness, so that the position at which the borders (bor) between the transparent regions (tra) and the gradation ND regions (gnd) of the two filter members (ND1, ND2) approach each other and the vicinity of this position do not stop in the light path (LD).

18. The imaging apparatus according to claim 15 or 16, wherein each of the filter members (aND1, aND2) has a lowest density region where the transmittance is uniform and 80% or lower,
to provide the highest transmittance, the two filter members (aND1, aND2) are both retracted from the light path (LD), and
when the lowest density regions are inserted into and removed from the light path (LD), the F-number and/or the electronic shutter is set and at the same time the filter members (aND1, aND2) are moved according to the transition of subject brightness, so that the front ends (tip) of the filter members (aND1, aND2) do not stop in the light path (LD).

19. The imaging apparatus according to claim 15 or 16, wherein each of the filter members (bND1, bND2) has a lowest density region (Ind) where the transmittance is uniform and 80% or lower and a transparent region (tra) where the transmittance is uniform and at least 80%,
to provide the highest transmittance, the transparent regions (tra) of the two filter members (bND1, bND2) overlap each other and cover the entire light path (LD),
to limit the amount of transmitted light, the lowest density region (Ind) of one or both of the filter members (bND1, bND2) is inserted into the light path (LD) to cover the entire light path (LD), and then, the gradation ND regions of the two filter members (bND1, bND2) are inserted into the light path (LD) from opposite positions in such a way that the ND density of the gradation ND region in the light path (LD) gradually increases so as to attenuate the amount of transmitted light, and
when the lowest density regions are inserted into and removed from the light path (LD), the F-number and/or the electronic shutter is set and at the same time the filter members are moved according to the transition of subject brightness, so that the borders (dv1) between the transparent regions (tra) and the lowest density regions (Ind) of the filter members do not stop in the light path (LD).

20. The imaging apparatus according to claim 15 or 16, wherein the F-number defined by the aperture stop (St) formed of a plurality of diaphragm blades can be arbitrarily set by an external operation, and
according to the transition of subject brightness, the light amount adjuster (2) is set to provide the amount of transmitted light corresponding to the arbitrarily set F-number, or the light amount adjuster (2) and the electronic shutter are set to provide the combination of the amount of transmitted light and the shutter speed of the electronic shutter corresponding to the arbitrarily set F-number.

21. The imaging apparatus according to claim 9 or 11, wherein phase difference of the light having a predetermined wavelength λ that passes through the border between the gradation ND region and the transparent region is smaller than or equal to λ/10.
